# EUROPÄISCHE PATENTSCHRIFT

(11) **EP 0 706 642 B1**
(45) Veröffentlichungstag und Bekanntmachung des Hinweises auf die Patenterteilung: **13.10.1999**
(21) Anmeldenummer: 95917364.2
(22) Anmeldetag: 27.04.1995
(51) Int. Cl.: G01G 11/12, G01G 11/04

(54) **Abgabe eines Fehlersignals bei einer Bandwaage mit zwei Wägezellen**
Delivery of a of a fault signal with a conveyor belt weigher having two load cells
Délivrance d'un signal d'erreur d'une bascule à bande comprenant deux cellules de pesage

(30) Priorität: 27.04.1994 DE 4414715
(43) Veröffentlichungstag der Anmeldung: 17.04.1996
(73) Patentinhaber: Pfister GmbH, 86165 Augsburg (DE)
(72) Erfinder: HÄFNER, Hans, Wilhelm, D-86551 Aichach-Walchshofen (DE)
(74) Vertreter: Fiener, Josef
(86) Internationale Anmeldenummer: EP9501608
(87) Internationale Veröffentlichungsnummer: WO9529390

(56) Entgegenhaltungen:
- EP-A- 0 565 740
- CH-A- 483 623
- DE-A- 2 102 147
- DE-B- 1 086 449
- GB-A- 843 943
- US-A- 4 126 196

## Beschreibung

Die Erfindung betrifft ein Verfahren und eine Vorrichtung zur Abgabe eines Fehlersignals bei der Bestimmung der Förderstärke einer Bandwaage, insbesondere einer Dosierbandwaage.

Bei derartigen Waagen wird ein Förderband über zwei im Abstand voneinander angeordnete Walzen geführt, von denen bei Dosierbandwaagen eine mittels eines drehzahlveränderlichen Antriebsmotors angetrieben wird. Da die geförderte Gutmenge neben der Bandbelastung, also der jeweiligen Momentanmasse auf der Meßstrecke zwischen Beschickungs- und Abgabeposition des Förderbandes abhängig ist von der Umlaufgeschwindigkeit des Förderbandes, wird diese Bandgeschwindigkeit anhand der Drehzahl des Antriebsmotors z.B. mittels eines Tachogenerators oder eines am Förderband anliegenden Reibrades bestimmt und der Auswerteelektronik zugeführt.

Ein derartiges Verfahren ist beispielsweise in der DE-AS 10 86 449 beschrieben. Aus der DE-OS 21 02 147 ist ebenfalls bekannt, zur Regelung eines Schüttgutstromes die Bandbelastung mit der Bandgeschwindigkeit zu multiplizieren, wobei zur Messung der Bandgeschwindigkeit ein die Drehzahl der Umlenkwalze über ein Nutenrad erfassender berührungsloser Impulsgeber dient.

Abhängig von der Höhe der jeweiligen eingestellten Umlaufgeschwindigkeit und der jeweiligen Bandbelastung, sowie der Temperatur und Justierung des Förderbandes ergeben sich jedoch mehrere Fehlereinflüsse, die zu erheblichen Ungenauigkeiten in der Messung und damit Einhaltung der gewählten Soll-Dosiermenge führen kann. Diese verschiedensten Fehlereinflüsse spielen für die Dosiergenauigkeit eine bedeutende Rolle, wie dies z. B. in Kochsiek: "Handbuch des Wägens", 1989, S. 354 - 370 dargestellt ist. So kann eine Abweichung bei der zudosierten Menge einer Komponente um einige Prozent zum Unbrauchbarwerden einer gesamten wertvollen Charge oder eines daraus hergestellten Produktes führen.

Es ist auch bekannt, zur genaueren Messung der Bandgeschwindigkeit auf die zweite, nicht angetriebene Walze einen zweiten Tachogenerator zu montieren und dessen Ausgangssignal mit dem ersten Tachogenerator des Antriebsmotors in Beziehung zu setzen. Ein derartiger zweiter Tachogenerator ist jedoch sehr aufwendig und berücksichtigt nicht alle Einflußparameter, beispielsweise nicht die Förderbanddehnung, die zudem wiederum von der Umgebungstemperatur abhängig ist. Diese Nachteile gelten auch für die Geschwindigkeitserfassung über die Walzendrehzahl, da durch auftretenden Schlupf des Förderbandes bezüglich den Umlenkwalzen die Messung der Umfangsgeschwindigkeit um einige Prozent verfälscht werden kann. Zudem ist dieses Erfassungsverfahren durch gesonderte Nutenräder und Übersetzungsgetriebe, wie bei der DE-OS 21 02 147, relativ aufwendig.

Demzufolge liegt der Erfindung die Aufgabe zugrunde, die Meßgenauigkeit der Förderstärke bei Bandwaagen, insbesondere Dosierbandwaagen unter Ausschaltung der genannten Fehlereinflüsse auf einfache Weise zu erhöhen.

Zur Lösung der Aufgabe wird ein Verfahren nach den Merkmalen des Patentanspruches 1 und eine Vorrichtung gemäß den Merkmalen des Patentanspruches 6 vorgeschlagen.

Durch die Anordnung von wenigstens zwei Wägezellen in einem vorbestimmten Abstand können die von diesen Wägezellen gegebenen Wägesignale unmittelbar miteinander verglichen und überprüft werden, da bei einer bekannten Bandgeschwindigkeit das Wägesignal an der zweiten Wägezelle, um eine bestimmte Zeitdifferenz versetzt, ebenfalls auftreten muß. Diese Zeitdifferenz wird dabei in einfachster Weise durch Quotientenbildung aus dem Abstand der beiden Wägezellen und der ohnehin gemessenen Bandgeschwindigkeit ermittelt. Somit müssen die Wägesignale der beiden Wägezellen um diese Zeitdifferenz versetzt auftreten. Die von den beiden Wägezellen gemessenen Bandbelastungen müssen also unter Berücksichtigung der Bandgeschwindigkeit und der daraus ermittelten Zeitdifferenz identisch sein. Falls hierbei größere Abweichungen zwischen den jeweiligen von den Wägezellen ermittelten Bandbelastungen auftreten, wird ein Fehlersignal abgegeben, da in diesem Falle eine Störung, beispielsweise ein übermäßiger Schlupf oder eine Störung einer der Wägezellen oder ein externer Störeinfluß, wie beispielsweise ein Einklemmen eines Steines an einer der den Wägezellen zugeordneten Wägerollen vorliegt. Durch die beschriebene gegenseitige Überwachung der beiden Wägezellen wird somit eine qualitätssichernde Maßnahme vorgeschlagen, die auf einfache Weise die am häufigsten auftretenden Fehlereinflüsse bei der Bestimmung der Förderstärke über einen langen Zeitraum ausschließt.

Von besonders vorteilhafter Ausführung ist die direkte Erfassung der Bandgeschwindigkeit des Förderbandes mittels der beiden in festem Abstand zueinander angeordneten Wägezellen und der damit auftretenden zeitlichen Wägesignal-Versetzung (Zeitdifferenz), da hierdurch die tatsächlich vorliegende Bandgeschwindigkeit schlupffrei gemessen werden kann und die ermittelten Werte bei Dosierbandwaagen sodann mit der eingegebenen Soll-Antriebsdrehzahl bzw. Umlaufgeschwindigkeit in Beziehung gesetzt werden. Damit können Fehlereinflüsse zuverlässig festgestellt und korrigiert, sowie selbst sich gegenseitig beeinflussende Parameter sicher als Störgröße erkannt und ausgeschaltet werden. Dabei wird sowohl die Bandgeschwindigkeit als auch die Bandbelastung von den beiden Wägezellen im wesentlichen gleichzeitig erfaßt, also von den Wägezellen beide für die Förderstärke wesentlichen Parameter abgeleitet und damit die Wägezellen in zweifacher Hinsicht verwendet, so daß sich eine Vereinheitlichung der verwendeten Sensorentypen und damit eine einfachere Bauweise ergibt.

Vorteilhaft ist weiterhin, wenn die beiden um die Zeitdifferenz versetzt gemessenen Werte der Bandbelastung nach der Messung gemittelt und/oder zwischengespeichert werden, da hierdurch geringfügige Schwankungen der Gewichts-Meßwerte während eines Umlaufes ausgeglichen werden können.

Eine weitere vorteilhafte Ausgestaltung ist der dem Vergleich nachgeschaltete Verfahrensschritt einer Störungsanzeige bzw. Abschaltung des Förderbandes bei einem unzulässig hohen Schlupfwert, der z. B. auf zu geringe Bandspannung hinweist und durch das erfindungsgemäße Verfahren durch einfachen Vergleich zwischen tatsächlicher Bandgeschwindigkeit und Umfangsgeschwindigkeit der Umlenk- bzw. Antriebswalze feststellbar ist.

Weitere vorteilhafte Ausgestaltungen sind Gegenstand der Unteransprüche und in der nachfolgenden Beschreibung eines Ausführungsbeispieles näher erläutert. In der Zeichnung zeigt:
- Fig. 1: eine Dosierbandwaage in schematischer Darstellung in Seitenansicht, und
- Fig. 2: einen Teilbereich einer Förderbandwaage in Seitenansicht.

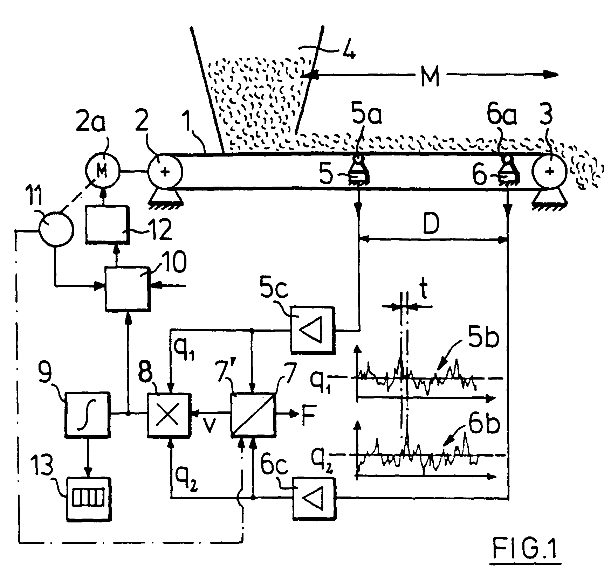

Fig. 1 zeigt eine Dosierbandwaage in Seitenansicht, deren Förderband 1 um eine Antriebswalze 2 und eine Umlenkwalze 3 umläuft. Das zu dosierende Gut gelangt im Direktabzug aus einem Bunker 4 über der Dosierbandwaage auf die zwischen Beschickungs- und Abgabeposition gebildete Meßstrecke M des Förderbandes 1 und wird dort mit etwa konstanter Schütthöhe weitertransportiert, so daß sich mit Änderung der Umlaufgeschwindigkeit des Förderbandes 1 und/oder des Auslaßquerschnittes des Bunkers 4 die Dosiermenge variieren läßt. Die Antriebswalze 2 wird hierbei von einem drehzahlregelbaren Antriebsmotor 2a angetrieben.

Unterhalb des oberen Trums des Förderbandes 1 sind nunmehr zwei baulich getrennte Wägezellen 5 und 6 in einem festen, vorbestimmten Abstand D voneinander angeordnet und von zugeordneten Wägerollen 5a und 6a zur Abstützung des Förderbandes 1 beaufschlagt. Die beiden Wägezellen 5 und 6 liefern ihre Wägesignale an zugeordnete Verstärker 5c unc 6c, wobei die hier übereinander dargestellten Wägesignal-Verlaufskurven 5b und 6b auftreten. Hierbei ist zu beachten, daß die Wägesignalverlaufkurve 6b im wesentlichen identisch ist mit dem Wägesignalverlauf 5b, da an beiden Wägezellen 5 und 6 die jeweils gleiche Bandbelastung q, wie dies hier mit q₁ und q₂ angedeutet ist, gemessen wird, jedoch um eine bestimmte Zeitdifferenz t verzögert bzw. versetzt. Dies ergibt je nach Bandgeschwindigkeit v eine zeitliche Phasenverschiebung zwischen den beiden Wägesignal-Verlaufskurven 5b und 6b, wie dies hier an den beiden größten Peaks oder Signalwerten dargestellt ist. In einem nachgeschalteten Vergleicher 7 erfolgt nun ein Vergleich der beiden Wägesignalkurven 5b und 6b, wobei der Vergleicher 7 von einem Tachogenerator 11 ein hier in Strichlinien dargestelltes, der Bandgeschwindigkeit v proportionales Signal erhält. Da der Abstand D zwischen den beiden Wägezellen 5 und 6 vorbestimmt und konstant ist, kann durch Quotientenbildung aus diesem Abstand D geteilt durch das Geschwindigkeitssignal zu der Bandgeschwindigkeit v die Zeitdifferenz t bestimmt werden, um die die Bandbelastungen bzw. deren jeweilige Massenwerte versetzt an dem Vergleicher 7 in identischer Größenordnung auftreten müssen. Wenn somit um die jeweilige Zeitdifferenz t versetzt unterschiedliche Wägesignale auftreten, kann dies beispielsweise bedeuten, daß an der Wägezelle 5 bzw. der zugeordneten Wägerolle 5a ein Fremdkörper eingeklemmt ist. Demzufolge wird bei einer solchen durch den Vergleicher 7 ermittelten Abweichung ein Fehlersignal F abgegeben. Unter dem Begriff Fehler- oder Störsignal soll hierbei nicht nur die Anzeige an eine Bedienperson verstanden werden, sondern beispielsweise auch die automatische Fehlerkorrektur, beispielsweise indem gemäß dem vorstehenden Beispiel ein übermäßig hoher Wägesignalwert, wie dieser durch den zeitlichen Verlauf der Wägesignalkurven 5b bzw. 6b repräsentiert wird, beispielsweise durch Varianzanalyse unberücksichtigt bleibt.

In bevorzugter Ausführung ist der Vergleicher 7 als Korrelator 7' ausgebildet, da durch die zeitlich versetzten Wägesignalkurven 5b und 6b ebenfalls die Zeitdifferenz t und hieraus wiederum unter Berücksichtigung des vorbestimmten Abstandes D die Bandgeschwindigkeit v schlupffrei berechnet werden kann. Somit könnte auf den vorstehend beschriebenen Tachogenerator 11 verzichtet werden. Die Geschwindigkeitserfassung wird hierbei wie folgt durchgeführt:

In dem nachgeschalteten Korrelator 7' erfolgt eine Korrelation der beiden Wägesignalkurven 5b und 6b, wobei die Verzögerungszeitspanne oder Zeitdifferenz t durch übliche, dem Fachmann bekannte Zeit- oder Phasenverschiebungsmeßvorrichtungen bestimmbar ist. So kann beispielsweise die Wägesignal-Verlaufskurve 5b in einem Schieberegister verzögert eingegeben werden und somit das Maximum der Korrelationsfunktion bestimmt werden. Aus dieser Maximum-Ermittlung durch Verzögerung einer Signalkurve läßt sich somit das Maximum der Übereinstimmung und damit die Verzögerungszeitspanne oder Zeitdifferenz t bestimmen. Hierzu kann beispielsweise ein nicht näher dargestellter, im Korrelator 7' integrierter Maximum-Detektor dienen, wobei gemäß der an sich bekannten Kreuzkorrelationsfunktion der Abszissenwert des Maximums als Nennergröße auf einen Quotientenbildner gegeben wird, in dem der vorbestimmte Abstand D, nämlich der Längsabstand der Wägezellen 5 und 6 in Umlaufrichtung des Förderbandes 1 als Zählergröße eingegeben ist. Unter Einbeziehung des Abstandes D zwischen den beiden Wägezellen 5 und 6 kann somit unter Zugrundelegung der üblichen Geschwindigkeitsformel v = D/t die tatsächliche Bandgeschwindigkeit v schlupffrei bestimmt werden. Zur Bestimmung dieser Zeitdifferenz t können auch andere, an sich bekannte Korrelationsverfahren Verwendung finden.

Von besonderem Vorteil ist hierbei, daß aus den Wägesignal-Verlaufskurven 5b und 6b neben der Bestimmung der Bandgeschwindigkeit v zugleich die Bandbelastung q zu erhalten ist. Dieser Wert wird neben der errechneten Bandgeschwindigkeit v einer Multiplikationsschaltung 8 zugeleitet, die hieraus die Momentan-Förderstärke Q = q x v berechnet. Anschließend wird in einer Integrationsvorrichtung 9 die Integration der Förderstärke Q über die Zeit zur Bestimmung der Fördermenge M in an sich bekannter Weise durchgeführt und an einem Display 13 angezeigt. Die in der Multiplikationsschaltung 8 bzw. der Integrationsschaltung 9 festgestellten Werte können nun ebenfalls auf an sich bekannte Weise einem Vergleicherelement 10 zugeleitet werden, um den bei einer Dosierbandwaage gewünschten Ist-/Sollwert-Vergleich durchzuführen. Es sei darauf hingewiesen, daß die vorstehend beschriebenen, elektronischen Bauteile 5c, 6c, 7, 8, 9 und 10 in einer Mikrocomputer-Steuerung zu einem Auswerteelektronikgerät zusammengefaßt werden können.

Im Vergleicherelement 10 wird die Ist-Förderstärke Q mit dem Signal von dem vorstehend erwähnten Tachogenerator 11 verglichen, der die Antriebsdrehzahl des Antriebsmotors 2a oder die Drehzahl bzw. Umfangsgeschwindigkeit der Antriebswalze 2 oder der Umlenkwalze 3 mißt. Tritt durch den Einfluß der Parameter, Bandlast, Antriebsdrehzahl, Temperatur usw. ein Schlupf an der Antriebswalze 2 auf, so wird entsprechend der Abweichung nunmehr die Antriebsdrehzahl über einen Regler 12 nachgeregelt werden, so daß die gewünschte Fördermenge M oder Förderstärke Q unter Berücksichtigung des Schlupfes eingehalten wird.

Bemerkenswert ist insbesondere, daß der hier der Antriebswalze 2 zugeordnete Tachogenerator 11 zur Durchführung des grundsätzlichen Verfahrens nicht notwendig ist, da die über die Wägezellen 5 und 6, sowie den Korrelator 7 ermittelte tatsächliche Bandgeschwindigkeit v allein ausreicht, um die geförderte Dosiermenge zu berechnen. In dieser Ausführung ohne aufwendige(n) Tachogenerator(en) ist diese Bandwaage gegenüber der als Stand der Technik beschriebenen mit zwei Tachogeneratoren besonders einfach in der Herstellung.

Wird jedoch ein Tachogenerator 11 oder ein anderes Meßsystem zur Messung der Walzenumfangsgeschwindigkeit verwendet, läßt sich der jeweils vorliegende Schlupf aus dem Vergleich zwischen Tachogeneratorsignal und tatsächlicher Bandgeschwindigkeit v ermitteln, so daß die Betriebsbedingungen der Dosierbandwaage noch zusätzlich überwacht werden können. Tritt beispielsweise ein Schlupf von mehreren Prozent auf, so deutet dies auf eine zu geringe Bandspannung der Dosierbandwaage oder andere störende Faktoren, wie eine Verschmutzung der Antriebswalze 2 hin, so daß dieser Betriebszustand der Bedienungsperson neben dem Fehlersignal F ebenfalls als Störung angezeigt werden kann. Bei noch höherem festgestellten Schlupf, der langfristig zu einer Beschädigung des Förderbandes 1 führen könnte, kann das Förderband 1 auch abgeschaltet werden. Somit ist durch diese Ermittlung der tatsächlichen Bandgeschwindigkeit auch ein kontinuierliches Überwachungsverfahren gegen unzulässige Betriebszustände oder als Hinweis auf notwendige Wartungsarbeiten möglich.

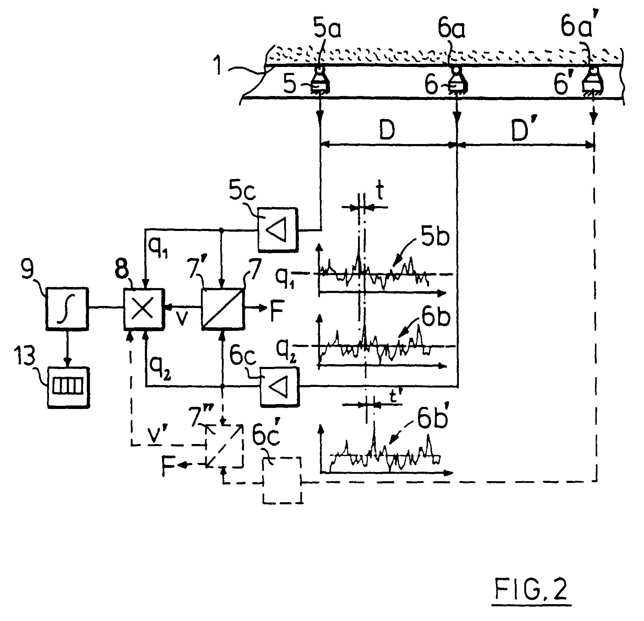

Fig. 2 zeigt die Anwendung des erfindungsgemäßen Verfahrens zum Betreiben von Förderband- bzw. Dosierbandwaagen am Beispiel einer Förderbandwaage, die in Seitenansicht dargestellt ist. Diese Förderbandwaage arbeitet ähnlich der Dosierbandwaage in Fig. 1, indem die geförderte Schüttgutmenge mittels unterhalb des Förderbandes 1 angeordneten Wägezellen 5, 6 gewichtsmäßig bestimmt wird. Gleiche Bauteile sind hierbei mit identischen Bezugszeichen versehen, wobei jedoch gegenüber der Dosierbandwaage gemäß Fig. 1 kein Vergleicherelement 10 erforderlich ist, da hier keine Regelung der Bandgeschwindigkeit v erfolgt, sondern nur deren Messung. Damit ist jedoch, wie vorstehend beschrieben, über die gleichzeitige Messung des auf den Wägezellen 5, 6 wirkenden Gewichtes des Schüttgutes (Bandbelastung q) und der ermittelten Bandgeschwindigkeit v durch Korrelation der Wägesignal-Verlaufskurven 5b, 6b eine gravimetrische Ermittlung der durchlaufenden Gutmenge auch ohne Tachogenerator möglich.

Es sei darauf hingewiesen, daß eine Korrelation zwischen den Wägesignal-Verlaufskurven 5b, 6b der beiden Wägezellen 5, 6, die bevorzugt in der gleichen Längsebene des Förderbandes 1 angeordnet sind, vorgenommen wird. Jedoch können auch beispielsweise mehr als zwei Wägezellen 5 und 6 vorgesehen sein, beispielsweise in Umlaufrichtung des Förderbandes 1 noch im vorzugsweise gleichen Abstand D' eine weitere Wägezelle 6' mit zugeordneter Wägerolle 6a' und Korrelator 7", wie dies in Strichlinien dargestellt ist, so daß die Korrelation auch zwischen dieser Wägezelle 6' und der Wägezelle 6 bzw. deren zugehörigen Wägesignal-Verlaufskurven 6b, 6b' durchgeführt wird und somit eine überprüfung und ggf. Mittelung der berechneten Bandgeschwindigkeitswerte bzw. Zeitdifferenzen t, t' vorgenommen werden kann, indem z. B. der Durchschnittswert der Zeitdifferenzen t und t' der Korrelatoren 7' und 7" gebildet wird. Weiterhin ist eine beliebige Vervielfachung der wenigstens zwei Wägezellen 5, 6 mit zugeordnetem Vergleicher 7, z. B. auf sechs Wägezellen, möglich.

Durch das beschriebene Verfahren zur schlupffreien Erfassung der Bandgeschwindigkeit ist es in Weiterbildung des Verfahrens möglich, selbst Störeinflüsse eines unregelmäßig umlaufenden Förderbandes 1 zu erfassen. Ein Förderband läßt sich nicht bzw. nur unter größtem Aufwand so herstellen, daß jede beliebige Teilstrecke jedem anderen beliebigen Teilabschnitt in Form und Gewicht exakt gleicht. Insbesondere am Stoß bzw. Überlappung der Gewebeverstärkung ist das Förderband 1 schwerer als an den anderen Stellen, so daß diese Stelle des Förderbandes 1 beim Überlaufen der Wägerollen 5a, 6a eine höhere Gewichtsanzeige liefert und damit das Meßergebnis verfälscht. Ebenso ergeben sich herstellungsbedingt leichtere Stellen des Förderbandes. Selbst wenn diese Unterschiede im Gurteigengewicht erkannt werden, können sie als Fehlereinfluß auf die Dosierung nicht als systematischer Meßfehler korrigiert werden, da sie durch den Schlupf keiner bestimmten Walzen- oder Trommelstelle zuzuordnen sind.

Durch die beschriebene schlupffreie Erfassung mittels der korrelierten Wägesignalkurven 5b, 6b können nunmehr in besonders vorteilhafter Weise diese Gewichtsunterschiede oder andere Unwuchten erfaßt werden. Hierzu läuft das Förderband 1 im Leerzustand um und die Wägezellen 5 und 6 können die von den Gewichtsunterschieden und dgl. hervorgerufenen Nullpunktverschiebungen registrieren. Im Betrieb mit belastetem Förderband kann dann der jeweiligen Stelle des Förderbandes 1 der entsprechende Plus-/Minuswert der Nullpunktverschiebung zugeordnet und vom Wiegeergebnis entsprechend subtrahiert oder addiert werden. Ebenso kann auch eine Wägezelle zu diesem Zweck außerhalb der Meßstrecke M, z. B. links vom Bunker 4 oder am unteren Trum des Förderbandes 1, vorgesehen sein.

## Patentansprüche

1. Verfahren zur Abgabe eines Fehlersignals bei der Bestimmung der Förderstärke einer Bandwaage, insbesondere einer Dosierbandwaage, mit einem über wenigstens eine Antriebswalze (2, 3) umlaufenden Förderband (1), wobei die Bandgeschwindigkeit (v) gemessen wird und durch Multiplikation mit der gravimetrisch ermittelten, entlang einer Meßstrecke (M) zwischen Beschickung und Abgabe auftretenden Bandbelastung die Förderstärke bestimmt wird, wobei innerhalb der Meßstrecke (M) wenigstens zwei Wägezellen (5, 6) in einem vorbestimmten Abstand (D) vorgesehen sind, deren Wägesignal-Verlaufskurven (5b, 6b) unter Berücksichtigung der Bandgeschwindigkeit (v) verglichen werden und bei Abweichung der um die aus Abstand (D) und Bandgeschwindigkeit (v) ermittelte Zeitdifferenz (t) versetzten Bandbelastungen (q₁, q₂) der Wägezellen (5, 6) ein Fehlersignal (F) abgegeben wird.

2. Verfahren nach Anspruch 1,
dadurch gekennzeichnet, daß
zur Bestimmung einer zeitlichen Phasenverschiebung und der Zeitdifferenz (t) die beiden Wägesignal-Verlaufskurven (5b, 6b) der beiden Wägezellen (5, 6) korreliert werden, sowie die ermittelte Zeitdifferenz (t) unter Berücksichtigung des Abstandes (D) zur Bestimmung der Bandgeschwindigkeit (v) verwendet wird.

3. Verfahren nach Anspruch 1 oder 2,
dadurch gekennzeichnet, daß
die gemessenen Wägesignal-Verlaufskurven (5b, 6b) zur Bestimmung der Bandbelastung (q) gemittelt werden.

4. Verfahren nach Anspruch 2 oder 3,
dadurch gekennzeichnet, daß
eine dritte Wägezelle (6') vorgesehen ist, und die Zeitdifferenz (t) zwischen den Wägesignal-Verlaufskurven (5b, 6b) mit der Zeitdifferenz (t') zwischen den Wägesignal-Verlaufskurven (6b, 6b') der Wägezellen (6, 6') verglichen wird.

5. Verfahren nach einem der Ansprüche 2 bis 4,
dadurch gekennzeichnet, daß
die Umlaufsgeschwindigkeit der Antriebswalze (2) oder einer Umlenkwalze (3) gemessen wird und mit der ermittelten Bandgeschwindigkeit (v) des Förderbandes (1) verglichen wird und bei einer vorbestimmbaren Abweichung eine Störungsanzeige bzw. Abschaltung des Förderbandes (1) erfolgt.

6. Vorrichtung zur Abgabe eines Fehlersignals bei der Bestimmung der Förderstärke einer Bandwaage, insbesondere einer Dosierbandwaage, mit einem über wenigstens eine Antriebswalze (2, 3) umlaufenden Förderband (1), wobei die Bandgeschwindigkeit (v) gemessen wird und durch Multiplikation mit der gravimetrisch ermittelten, entlang einer Meßstrecke (M) zwischen Beschickung und Abgabe auftretenden Bandbelastung die Förderstärke bestimmt wird, wobei zur Abstützung eines Bereiches des Förderbandes (1) innerhalb der Meßstrecke (M) wenigstens zwei Wägezellen (5, 6) in einem vorbestimmten Abstand (D) angeordnet sind und mit einem Vergleicher (7) verbunden sind, wobei bei Abweichung der um die aus Abstand (D) und Bandgeschwindigkeit (v) ermittelte Zeitdifferenz (t) versetzten Bandbelastungen (q₁, q₂) der Wägezellen (5, 6) ein Fehlersignal (F) abgegeben wird.

7. Vorrichtung nach Anspruch 6,
dadurch gekennzeichnet, daß
der Vergleicher (7) als Korrelator (7') zur Bestimmung einer Zeitdifferenz (t) zwischen den Wägesignal-Verlaufskurven (5b, 6b) der Wägezellen (5, 6) ausgebildet ist.

8. Vorrichtung nach Anspruch 7,
dadurch gekennzeichnet, daß
eine dritte Wägezelle (6') zur Abstützung des Förderbandes (1) vorgesehen ist, die ebenfalls mit einem Korrelator (7") zur Korrelation der zugeordneten Wägesignal-Verlaufskurve (6b') mit einer der Wägesignal-Verlaufskurven (5b, 6b) der ersten und/oder zweiten Wägezellen (5, 6) verbunden ist.

9. Vorrichtung nach Anspruch 8,
dadurch gekennzeichnet, daß
der vorbestimmte Abstand (D) zwischen den Wägezellen (5 und 6) dem Abstand (D') zwischen den Wägezellen (6 und 6') entspricht.

10. Vorrichtung nach einem der Ansprüche 7 bis 9,
dadurch gekennzeichnet, daß
eine Multiplikationsschaltung (8) vorgesehen ist, die als Eingangsparameter wenigstens eine Wägesignal-Verlaufskurve (5b und/oder 6b) zur Bestimmung der Bandbelastung (q) und die im Korrelator (7') ermittelte Zeitdifferenz (t) bzw. die daraus unter Berücksichtigung des Abstandes (D) zwischen den beiden Wägezellen (5 und 6) ermittelte Bandgeschwindigkeit (v) aufweist.

11. Vorrichtung nach einem der Ansprüche 7 bis 10,
dadurch gekennzeichnet, daß
an einer der Walzen (2, 3) ein Tachogenerator (11) angeschlossen ist, der mit einem Vergleicherelement (10) zum Vergleich der Umfangsgeschwindigkeit der Walze(-n) (2, 3) mit den Geschwindigkeitssignalen der Bandgeschwindigkeit (v) und zur Bestimmung des Schlupfes des Förderbandes (1) verbunden ist.

12. Vorrichtung nach einem der Ansprüche 6 bis 11,
dadurch gekennzeichnet, daß
eine dritte Wägezelle (6') außerhalb der Meßstrecke (M) vorgesehen ist, die zur Erfassung von Belastungsänderungen beim Leer-Durchlauf des Förderbandes (1) vorgesehen ist.

## Claims

1. A method of issuing an error signal during determination of the feed rate of a conveyor type weigher, especially a batching conveyor type weigher, comprising a conveyor belt (1) circulating over at least one drive roller (2, 3), wherein the belt speed (v) is measured and the feed rate is determined by multiplication with the gravimetrically determined belt loading appearing along a measuring stretch (M) between charging and discharging, wherein at least two load cells (5, 6) are provided within the measuring stretch (M) a predetermined distance (D) apart and their weighing signal response curves (5b, 6b) are compared, taking into account the belt speed (v), and an error signal (F) is issued when there is a discrepancy between the belt loadings (q₁, q₂) of the load cells (5, 6) offset by the time difference (t) determined from the distance (D) and the belt speed (v).

2. A method according to claim 1,
characterized in that
the two weighing signal response curves (5b, 6b) of the two load cells (5, 6) are correlated to determine a time phase displacement and the time difference (t), and the determined time difference (t) is used to determine the belt speed (v), taking into account the distance (D).

3. A method according to claim 1 or 2,
characterized in that
the measured weighing signal response curves (5b, 6b) are averaged to determine the belt loading (q).

4. A method according to claim 2 or 3,
characterized in that
a third load cell (6') is provided and the time difference (t) between the weighing signal response curves (5b, 6b) is compared with the time difference (t') between the weighing signal response curves (6b, 6b') of the load cells (6, 6').

5. A method according to any of claims 2 to 4,
characterized in that
the speed of circulation of the drive roller (2) or a tail roller (3) is measured and compared with the determined belt speed (v) of the conveyor belt (1) and an indication of interference is provided or the conveyor belt (1) is turned off when there is a predetermined discrepancy.

6. Apparatus for issuing an error signal during determination of the feed rate of a conveyor type weigher, especially a batching conveyor type weigher, comprising a conveyor belt (1) circulating over at least one drive roller (2, 3), wherein the belt speed (v) is measured and the feed rate is determined by multiplication with the gravimetrically determined belt loading appearing along a measuring stretch (M) between charging and discharging, wherein at least two load cells (5, 6) are provided within the measuring stretch (M) a predetermined distance (D) apart to support a region of the conveyor belt (1) and are connected to a comparator (7), wherein an error signal (F) is issued when there is a discrepancy between the belt loadings (q₁, q₂) of the load cells (5, 6) offset by the time difference (t) determined from the distance (D) and the belt speed (v).

7. Apparatus according to claim 6,
characterized in that
the comparator (7) is in the form of correlator (7') for determining a time difference (t) between the weighing signal response curves (5b, 6b) of the load cells (5, 6).

8. Apparatus according to claim 7,
characterized in that
a third load cell (6') is provided to support the conveyor belt (1) and is likewise connected to a correlator (7") for correlating the associated weighing signal response curve (6b') with the weighing signal response curves (5b, 6b) of the first and/or second load cells (5, 6).

9. Apparatus according to claim 8,
characterized in that
the predetermined distance (D) between the load cells (5 and 6) corresponds to the distance (D') between the load cells (6 and 6').

10. Apparatus according to any of claims 7 to 9,
characterized in that
a multiplying circuit (8) is provided having as input parameters at least one weighing signal response curve (5b and/or 6b) for determining the belt loading (q) and the time difference (t) determined in the correlator (7') or the belt speed (v) determined therefrom taking into account the distance (D) between the two load cells (5 and 6).

11. Apparatus according to any of claims 7 to 10,
characterized in that
a tacho-generator (11) is connected to one of the rollers (2, 3) and is connected to a comparator element (10) to compare the peripheral speed of the roller(s) (2, 3) with the speed signals of the belt speed (v) and to determine slip of the conveyor belt (1).

12. Apparatus according to any of claims 6 to 11,
characterized in that
a third load cell (6') is provided outside the measuring stretch (M), being provided to detect alterations in loading with the conveyor belt (1) running empty.

## Revendications

1. Procédé pour délivrer un signal d'erreur lors de la détermination du débit de transport d'une bascule à bande, notamment d'une bascule à bande doseuse, avec une bande transporteuse (1) circulant sur au moins un cylindre d'entraînement (2, 3), la vitesse (v) de la bande étant mesurée et le débit de transport étant déterminé par multiplication avec la charge de la bande, déterminée par gravimétrie, qui apparaît le long d'un parcours de mesure (M) entre le chargement et le déchargement, au moins deux cellules de pesage (5, 6) étant prévues à une distance prédéterminée (D) dans le parcours de mesure (M), cellules dont les courbes d'évolution du signal de pesage (5b, 6b) sont comparées en tenant compte de la vitesse (v) de la bande, et un signal d'erreur (F) étant délivré en cas de divergence des charges de bande (q₁, q₂) des cellules de pesage (5, 6) décalées de la différence de temps (t) déterminée à partir de la distance (D) et de la vitesse (v) de la bande.

2. Procédé selon la revendication 1, **caractérisé** en ce que, afin de déterminer un déphasage dans le temps et la différence de temps (t), on corrèle les deux courbes d'évolution du signal de pesage (5b, 6b) des deux cellules de pesage (5, 6), et la différence de temps (t) déterminée est utilisée, en tenant compte de la distance (D), pour déterminer la vitesse (v) de la bande.

3. Procédé selon la revendication 1 ou 2, **caractérisé** en ce que, pour déterminer la charge de la bande (q), on fait la moyenne des courbes d'évolution du signal de pesage (5b, 6b) mesurées.

4. Procédé selon la revendication 2 ou 3, **caractérisé** en ce qu'une troisième cellule de pesage (6') est prévue, et la différence de temps (t) entre les courbes d'évolution du signal de pesage (5b, 6b) est comparée à la différence de temps (t') entre les courbes d'évolution du signal de pesage (6b, 6b') des cellules de pesage (6, 6').

5. Procédé selon une des revendications 2 à 4, **caractérisé** en ce que la vitesse de rotation du cylindre d'entraînement (2) ou d'un cylindre de renvoi (3) est mesurée et comparée à la vitesse (v) déterminée de la bande transporteuse (1), et un affichage de défaillance ou un arrêt de la bande transporteuse (1) a lieu en présence d'une divergence prédéterminable.

6. Dispositif pour délivrer un signal d'erreur lors de la détermination du débit de transport d'une bascule à bande, notamment d'une bascule à bande doseuse, avec une bande transporteuse (1) circulant sur au moins un cylindre d'entraînement (2, 3), la vitesse (v) de la bande étant mesurée et le débit de transport étant déterminé par multiplication avec la charge de la bande, déterminée par gravimétrie, qui apparaît le long d'un parcours de mesure (M) entre le chargement et le déchargement, au moins deux cellules de pesage (5, 6) étant disposées à une distance prédéterminée (D) dans le parcours de mesure (M) pour soutenir une région de la bande transporteuse (1), et étant reliées à un comparateur (7), et un signal d'erreur (F) étant délivré en cas de divergence des charges de bande (q₁, q₂) des cellules de pesage (5, 6) décalées de la différence de temps (t) déterminée à partir de la distance (D) et de la vitesse (v) de la bande.

7. Dispositif selon la revendication 6, **caractérisé** en ce que le comparateur (7) est réalisé sous forme de corrélateur (7') pour déterminer une différence de temps (t) entre les courbes d'évolution du signal de pesage (5b, 6b) des cellules de pesage (5, 6).

8. Dispositif selon la revendication 7, **caractérisé** en ce qu'une troisième cellule de pesage (6') est prévue pour soutenir la bande transporteuse (1), cellule qui est elle aussi reliée à un corrélateur (7") pour corréler la courbe associée d'évolution du signal de pesage (6b') à une des courbes d'évolution du signal de pesage (5b, 6b) de la première ou deuxième cellule de pesage (5, 6).

9. Dispositif selon la revendication 8, **caractérisé** en ce que la distance prédéterminée (D) entre les cellules de pesage (5 et 6) correspond à la distance (D') entre les cellules de pesage (6 et 6').

10. Dispositif selon une des revendications 7 à 9, **caractérisé** en ce qu'un montage multiplicateur (8) est prévu, qui présente comme paramètres d'entrée au moins une courbe d'évolution du signal de pesage (5b et/ou 6b) pour déterminer la charge de la bande (q), et la différence de temps (t) déterminée dans le corrélateur (7'), ou encore la vitesse (v) de la bande, déterminée à partir de cette différence de temps (t) en tenant compte de la distance (D) entre les deux cellules de pesage (5 et 6).

11. Dispositif selon une des revendications 7 à 10, **caractérisé** en ce qu'une génératrice tachymétrique (11) est raccordée à un des cylindres (2, 3), et elle est reliée à un élément comparateur (10) pour comparer la vitesse de rotation du cylindre (2, 3) aux signaux de vitesse (v) de la bande et pour déterminer le patinage de la bande transporteuse (1).

12. Dispositif selon une des revendications 6 à 11, **caractérisé** en ce qu'une troisième cellule de pesage (6') est prévue en dehors du parcours de mesure (M) pour enregistrer les modifications de charge lors du passage à vide de la bande transporteuse (1).
